# EUROPEAN PATENT APPLICATION

(11) **EP 4 838 852 A1**
(43) Date of publication of application: **11.11.2026**
(21) Application number: 26172927.1
(22) Date of filing: 17.04.2026
(51) Int. Cl.: H04L 41/0677, H04L 49/55, H04L 43/10, H04L 43/50, H04L 43/0823

(54) **DETECTING ONE OR MORE POTENTIALLY FAULTY NETWORKING DEVICES OF A CLUSTER OF NETWORKING DEVICES HAVING A LEAF-SPINE TOPOLOGY**

(30) Priority: 07.05.2025 US 202563801482 P; 30.06.2025 US 202519255639
(71) Applicant: Arista Networks, Inc., Santa Clara, CA 95054 (US)
(72) Inventor: Birmiwal, Sharad, Santa Clara, California, 95054 (US); Chan, Travis Seung Yin, Santa Clara, California, 95054 (US); Liu, Justin Zhien, Santa Clara, California, 95054 (US); Thai, Thanh Lam, Santa Clara, California, 95054 (US); Yousuf, Muhammad, Santa Clara, California, 95054 (US)
(74) Representative: Hoffmann Eitle

(57) **Abstract**

Techniques detect one or more potentially faulty networking devices of a cluster of networking devices having a leaf-spine topology. Such techniques involve directing leaf devices to send test communications in parallel through spine devices to a set of leaf devices encountering errors, the leaf devices and the spine devices forming at least a portion of the cluster of networking devices having the leaf-spine topology. Such techniques further involve obtaining, as electronic results of the test communications sent in parallel, operating output from the cluster of networking devices. Such techniques further involve, based on the operating output from the cluster of networking devices, providing machine-generated data identifying one or more potentially faulty networking devices of the cluster.

## Description

### BACKGROUND

A two-tier cell-based fabric network may have a spine-leaf architecture. In such a network, a first tier of leaf devices connects with hosts, and a second tier of spine devices connects in a fully meshed manner with the first tier of leaf devices.

When a first host sends a packet to a second host through the network, an ingress leaf device receives the packet, splits the packet into fabric cells, and sends (or sprays) the fabric cells evenly across the spine devices. The spine devices forward the fabric cells to an egress leaf device which reassembles the packet from the fabric cells, and provides the reassembled packet to the second host.

### BRIEF DESCRIPTION OF THE DRAWINGS

The foregoing and other objects, features and advantages will be apparent from the following description of particular embodiments of the present disclosure, as illustrated in the accompanying drawings in which like reference characters refer to the same parts throughout the different views. The drawings are not necessarily to scale, emphasis instead being placed upon illustrating the principles of various embodiments of the present disclosure.
FIG. 1 is a diagram of an electronic environment which supports detecting one or more potentially faulty networking devices of a cluster of networking devices having a leaf-spine topology in accordance with one or more embodiments.
FIG. 2 is a flowchart of a detection procedure which is performed on the cluster in accordance with one or more embodiments.
FIG. 3 is a diagram of certain circuitry which is involved in performing the detection procedure in accordance with one or more embodiments.
FIG. 4 is a first example situation which involves identifying one or more potentially faulty networking devices of the cluster in accordance with one or more embodiments.
FIG. 5 is a second example situation which involves identifying one or more potentially faulty networking devices of the cluster in accordance with one or more embodiments.
FIG. 6 is a third example situation which involves identifying one or more potentially faulty networking devices of the cluster in accordance with one or more embodiments.
FIG. 7 is a fourth example situation which involves identifying one or more potentially faulty networking devices of the cluster in accordance with one or more embodiments.
FIG. 8 is a fifth example situation which involves identifying one or more potentially faulty networking devices of the cluster in accordance with one or more embodiments.

### DETAILED DESCRIPTION

### Overview

A two-tier cell-based fabric network having a spine-leaf architecture enables creation of a large, ultra-scalable distributed switch system to support massively parallel computing applications, data centers, etc. Along these lines, the network may include a large number of leaf and spine devices (e.g., over a thousand networking devices) simultaneously performing high bandwidth transactions.

Unfortunately, the lightweight nature of fabric cell transmissions between the leaf and spine devices and the large number of networking devices may make it difficult to diagnose and cure transmission failures. For example, suppose that an ingress leaf device splits a packet into fabric cells and sends the fabric cells evenly across the spine devices for forwarding to an egress leaf device. Further suppose that the egress leaf device encounters a failure when attempting to reassemble the packet from fabric cells received from the spine devices.

In such a situation, it may be extremely challenging or even impractical to forensically locate the cause of the failure from status information maintained by the networking devices. Moreover, due to the scale of the network, it would be unreasonably time consuming to linearly retest each leaf device pair of the network to locate the cause of the failure. What is needed, therefore, is a way to effectively locate the cause of such a failure in a reasonable amount of time.

The above need is addressed at least in part by a technique that involves detecting one or more potentially faulty networking devices of a cluster of networking devices having a leaf-spine topology. Such a technique includes directing leaf devices of the cluster to transmit test communications in parallel to a set of leaf devices encountering errors, and identifying one or more potentially faulty networking devices of the cluster based on results of the test communications sent in parallel. As the leaf devices transmit test communications in parallel to the set of leaf devices encountering errors, spine devices of the cluster are disabled (or excluded) one at a time during different test iterations to identify a potentially faulty leaf device and/or spine device (e.g., for replacement/removal/etc.).

Such transmitting of test communications in parallel is superior to linearly retesting each leaf device pair by reducing audit runtime as well as enabling discovery of queuing errors, cell-level fragmentation/reassembly-related errors, etc. Along these lines, multiple leaf devices of the cluster (but perhaps not all of the leaf devices of the cluster) send test communications through the spine devices at the same time. The more parallelism that is achieved, the greater the time savings.

Such a cluster may operate as a Distributed Etherlink Switch (DES) system which supports a large-scale computing environment such as those for artificial intelligence (AI), machine learning (ML), data centers, corporate campuses, and so on. Moreover, such detection/auditing may be performed while the cluster is in operation.

The various individual features of the particular arrangements, configurations, and embodiments disclosed herein can be combined in any desired manner that makes technological sense. Additionally, such features are hereby combined in this manner to form all possible combinations, variants and permutations except to the extent that such combinations, variants and/or permutations have been expressly excluded or are impractical. Support for such combinations, variants and permutations is considered to exist in this document.

### Environment Details

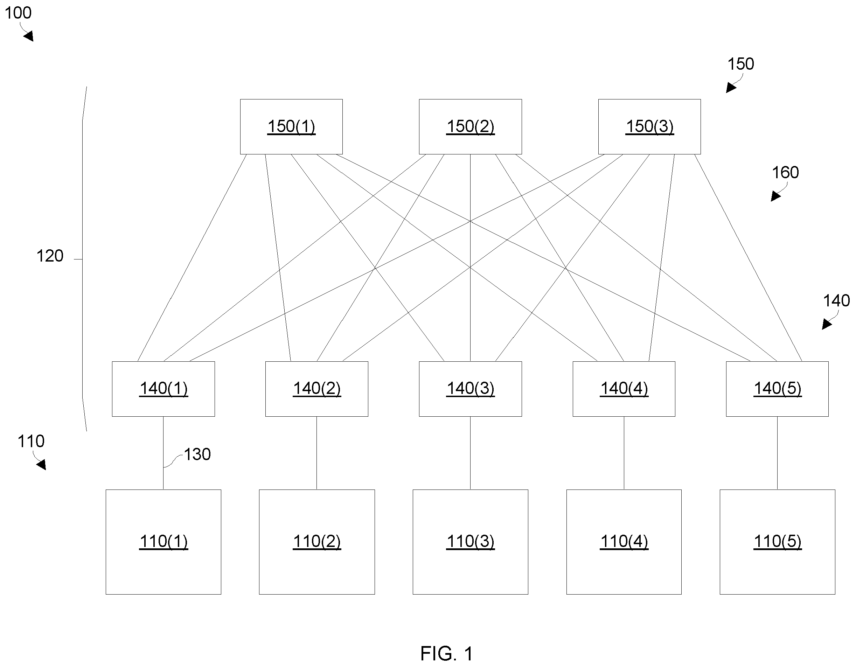

FIG. 1 shows an electronic environment 100 which supports detecting one or more potentially faulty networking devices of a cluster of networking devices having a leaf-spine topology in accordance with one or more embodiments. Such detection (or auditing of the cluster) enables location of a set of potentially faulty networking devices in a reasonable amount of time.

The electronic environment 100 includes host devices 110(1), 110(2), ... (collectively, host devices 110), a cluster of networking devices (or simply cluster) 120, and pathways 130 connecting the host devices 110 to the cluster 120. Details such as power supplies, equipment for temperature and humidity control, user input/output (I/O) devices for management, etc. are omitted from FIG. 1 for simplicity, but it should be understood that the electronic environment 100 includes such componentry. Moreover, it should be understood that the cluster 120 may be a portion of an even larger network.

The host devices 110 are constructed and arranged to perform useful work. Along these lines, the host devices 110 may perform specific tasks (or steps) and communicate through the pathways 130 and the cluster 120 to collectively provide one or more advanced functions, services, and/or progress for larger-scale endeavors.

The cluster 120 is constructed and arranged to convey communications among the host devices 110. Along these lines, the cluster 120 includes leaf devices 140(1), 140(2), ... (collectively, leaf devices 140), spine devices 150(1), 150(2), ... (collectively, spine devices 150), and links 160 which interconnect the leaf devices 140 and the spine devices 150.

The leaf devices 140 are constructed and arranged to directly connect with the host devices 110 through respective pathways 130. For example, the leaf device 140(1) directly connects with the host device 110(1) through one pathway 130. Likewise, the leaf device 140(2) directly connects with the host device 110(2) through another pathway 130, and so on.

When a leaf device 140 receives a packet from a host device 110 to be conveyed through the cluster 120, the leaf device 140 is referred to as an ingress leaf device 140 since the leaf device 140 intakes the packet from a packet-sending host device 110. The ingress leaf device 140 divides the packet into cells and sends the cells through the spine devices 150 for eventual reassembly and delivery to a packet-receiving host device 110.

When a leaf device 140 delivers a packet to a host device 110 from the cluster 120, the leaf device 140 is referred to as an egress leaf device 140 since the leaf device 140 outputs the packet to a packet-receiving host device 110. The egress leaf device 140 reassembles cells received from the spine devices 150 to form a reassembled packet and provides the reassembled packet to the packet-receiving host device 110.

The spine devices 150 are constructed and arranged to convey cells among the leaf devices 140 (from ingress leaf devices 140 to egress leaf devices 140). A suitable cell size is 512 bytes although other cell sizes are suitable for use as well (e.g., less than 512 bytes, 1K bytes, 2K bytes, etc.). Accordingly, the spine devices 150 are able to provide high bandwidth and low latency.

The links 160 connect the leaf devices 140 and the spine devices 150 together in a fully meshed manner. Along these lines, each leaf device 140 of the cluster 120 is connected to every spine device 150 of the cluster 120. In some arrangements, at least some of the links 160 are formed directly between circuit boards forming the leaf devices 140 and the spine devices 150 (e.g., via direct mating connectors). In some arrangements, at least some of the links 160 are provided via additional componentry such as a midplane, backplane, cabling, combinations thereof, etc.

It should be understood that the cluster 120 of the electronic environment 100 is shown in FIG. 1 as having eight networking devices in total (i.e., five leaf devices 140 and three spine devices 150) by way of example only. However, in an actual deployment, the cluster 120 may have any number of leaf devices 140 (e.g., M leaf devices 140, where M is at least 2) and any number of spine devices 150 (e.g., N spine devices 150, where N is at least 2). In some arrangements, the total number of networking devices in the cluster 120 may be in the 100s or 1000s for compute intensive workloads.

For example, the host devices 110 may take the form of AI accelerators (or processing engines) which perform a large sparse matrix computation which is split over 100s or 1000s of processors to reduce computation time. In some situations, the connectivity provided by the cluster 120 provides extremely reliable uncontended pathways between the AI accelerators to maximize accelerator utilization and minimize job completion time.

During operation, the host devices 110 perform processing tasks and send packets to other host devices 110 through the cluster 120. As ingress leaf devices 140 receive packets from packet-sending host devices 110, the ingress leaf devices 140 split the packets into cells and send the cells through the spine devices 150 to egress leaf devices 140. The egress leaf devices 140 reassemble the cells into packets and convey the reassembled packets to packet-receiving host devices 110.

Such fragmentation and reassembly of the packets may be performed in a manner which is transparent to the host devices 110. Furthermore, since the topology enables such communications to occur concurrently without congestion (e.g., cells are distributed, load balanced in a round robin manner, etc.), flows between the host devices 110 are optimized to enable the host devices 110 to remain maximally utilized.

It should be understood that explanations such as "splitting a packet into cells" and "reassembling cells into a packet" are somewhat figurative, but are expressed this way since such explanations are common with the art. Nevertheless, it should be understood that the cells have their own format (e.g., a header section and a payload section) and include additional information (e.g., for proper switching, for error detection, etc.).

For example, to convey a packet from a packet-sending host device 110 to a packet-receiving host device 110, an ingress leaf device 140 performs a packet splitting operation which includes generating (or computing) an initial cyclic redundancy check (CRC) value from the packet. The ingress leaf device 140 then sends cells which include, among other things, fragments (or chunks) of the packet and the initial CRC value (e.g., an initial checksum) through the spine devices 150 to an egress leaf device 140. When the egress leaf device 140 receives the cells and reassembles the packet from the fragments, the egress leaf device 140 generates a current CRC value (e.g., a current checksum) from the reassembled packet and compares the current CRC value with the initial CRC value to determine whether the packet has been conveyed properly.

Along these lines, if the current CRC value matches the initial CRC value, the egress leaf device 140 considers the packet to be intact. Accordingly, the egress leaf device 140 provides the packet to the packet-receiving host device 110.

However, if the current CRC value does not match the initial CRC value, the egress leaf device 140 considers the packet to be no longer intact. The cause of this failure could rest within the ingress leaf device 140, a spine device 150, the egress leaf device 140, combinations thereof, etc. For example, a faulty queue in one of the networking devices may have prevented a cell from being included in the packet reassembly operation. Other example causes include circuit board level malfunctions, chip level failures, other internal low-level anomalies, combinations thereof, and so on which may block a cell from being included in packet reassembly.

In such a situation, the egress leaf device 140 performs a remedial operation such as preventing delivery of the packet to the packet-receiving host device 110 and providing an indication that the packet has been dropped. Such an indication (or detection) may take the form of setting a CRC error bit that is polled, triggering a CRC error interrupt, activating other signaling mechanisms, combinations thereof, etc.

It should be understood that other operations for fault tolerance may be performed as well. For example, individual cell transmissions may also involve the use of CRC checksums. Such use enables error checking of individual cell transmissions through the links 160 between the leaf device 140 and the spine devices 150. However, such individual cell transmission checking provides limited fault detection and may not facilitate locating potentially faulty network devices which encounter deeper internal errors, anomalies, etc.

Along these lines, cells may arrive at an egress leaf device 140 for packet reassembly without causing a CRC error at the individual cell level. However, when the egress leaf device 140 attempts to reassemble the packet, the egress leaf device 140 encounters a packet-level CRC error (e.g., due to a missing cell) resulting in a packet drop situation.

For this packet drop situation in which a CRC error is encountered as cells are reassembled into a packet, the packet may be resent. However, if the packet drop situation persists and is reproducible, it may be desirable to locate and replace the potentially faulty componentry causing the error.

### Detection Process Details

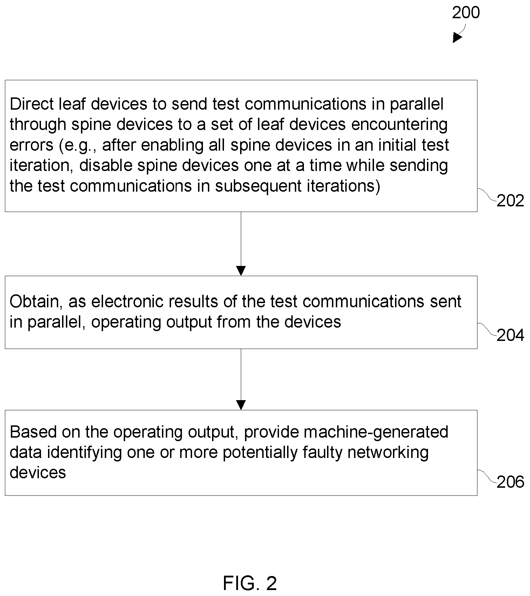

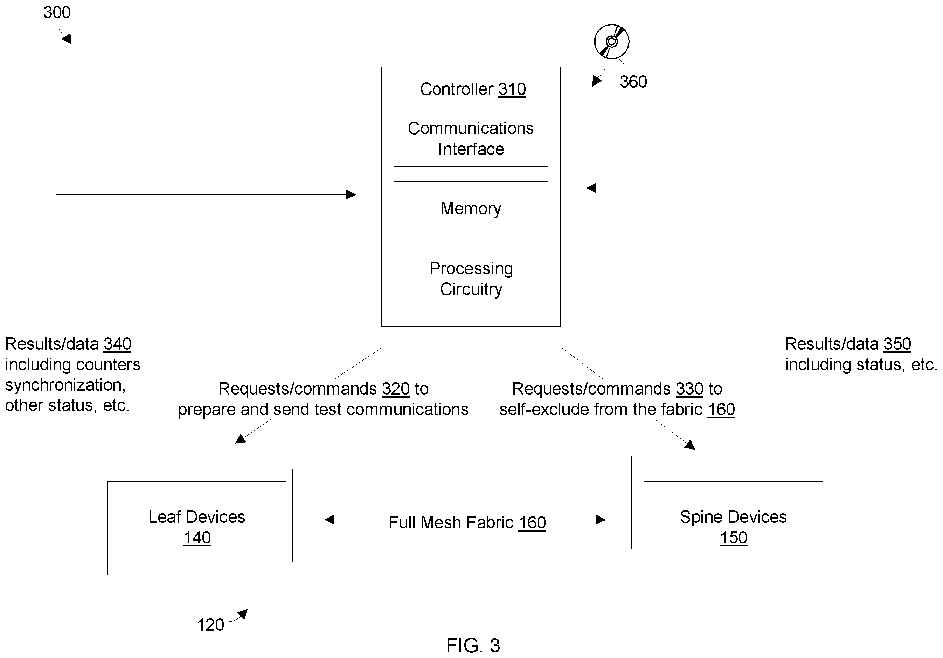

FIGS. 2 and 3 show certain details of a process for detecting one or more potentially faulty networking devices of a cluster of networking devices having a leaf-spine topology in accordance with certain embodiments. FIG. 2 is a flowchart of a detection (or cluster auditing) procedure 200 which may be performed by a controller (or other specialized circuitry) to locate one or more potentially faulty networking devices within a reasonable amount of time. FIG. 3 is a general diagram showing interactions/exchanges between the controller and other componentry of the cluster.

It should be understood that, prior to or at the beginning of the detection procedure 200, the controller may direct the networking devices to initialize certain transmission and/or error counters and/or synchronize operation. In some arrangements, the counters maintain the number of packets sent and received from each leaf device (e.g., per path counter support such that multiple traffic paths can be evaluated simultaneously). Such initialization and synchronization enables the controller to obtain transmission results from the networking devices to eventually detect which networking devices experienced a transmission blockage resulting in an error.

At 202 of the detection procedure 200 (FIG. 2) and after the counters have been initialized, the controller directs leaf devices to send test communications in parallel through spine devices to a set of leaf devices encountering errors (also referred to as a set of faulty receivers since the set of leaf devices encountered errors while receiving cells for packet reassembly). As mentioned earlier, the leaf devices and the spine devices form at least a portion of the cluster of networking devices having a leaf-spine topology (e.g., also see the cluster 120 described above in connection with FIG. 1).

Initially, the controller directs all of the leaf devices of the cluster to operate as ingress leaf devices by sending packets in parallel through the spine devices to the set of leaf devices encountering errors. Even leaf devices within the set of leaf devices encountering faults may send packets to themselves.

Such packets should be large enough to enable the ingress leaf devices to perform packet splitting operations which divide the packets into multiple cells and distribute the cells across multiple spine devices. In some arrangements, the leaf devices are configured to send test packets having the maximum packet size supported and at the maximum rate supported to fully stress the cluster during testing. In other arrangements, the leaf devices are configured to send test packets having a different packet size and/or at a different rate during testing.

Additionally, in some arrangements, the controller is able to set (or establish) a predefined transmission rate limit which is then imposed by the leaf devices. Such a constraint enables the detection procedure 200 to be performed on a deployment which is currently in operation (e.g., performing a large-scale computation for an AI application) with limited intrusiveness.

It should be understood that, when the test communications are sent in parallel, not all test communications need to be sent at once. Rather, one or more of the test communications may be delayed (or staggered) with respect to other test communications. However, more parallelism results in shorter testing time.

In some embodiments, the leaf devices include fabric access processors (FAPs) which are equipped with respective service activation testing (SAT) engines. In such a situation, the controller may direct the SAT engines to generate test packets for sending in parallel to the set of leaf devices encountering errors (instead of having host devices provide the test packets). A traffic generator that is suitable for generating such test packets is described in U.S. Application No. 19/063,695, filed on February 26, 2025 and entitled "Counting Packets in Monitored Flows from Multiple Senders to a Single Receiver," the contents and teachings of which are hereby incorporated by reference in their entirety.

In response to such controller direction, the ingress leaf devices send cells through the spine devices to the set of leaf devices encountering errors. In some situations, the ingress leaf devices perform load balancing by spreading the cells across the spine devices in a round robin manner.

At 204, the controller obtains, as electronic results of the test communications sent in parallel, operating output from the cluster of networking devices. Here, the controller acquires counter values which will enable the controller to determine where a test communication was blocked within the cluster if blockage of a test communication occurred. It should be understood that 202 and 204 may occur contemporaneously as will now be explained.

Within 202, the controller directs the leaf devices of the cluster to send test communications in parallel during multiple test iterations. Along these lines, in a first test iteration, the controller directs the leaf devices of the cluster to send test communications in parallel while all of the spine devices are enabled from conveying cells from ingress leaf devices to egress leaf devices.

In this first test iteration, the controller should expect to see the set of leaf devices encountering new errors. However, if the set of leaf devices is no longer encountering errors (e.g., as indicated by not receiving any packet drop indications and/or from the counter values), the detection procedure 200 may end. At this point, the controller may obtain some test communication results from the networking devices.

If the set of leaf devices encounter new errors in the first test iteration, the controller performs additional test iterations while disabling (or excluding) the spine devices one at a time from conveying cells from ingress leaf devices to egress leaf devices. Along these lines, in a second test iteration, the controller disables a first spine device and directs the leaf devices of the cluster to again send test communications in parallel to the set of leaf devices encountering errors. In this second test iteration, the leaf devices send the test communications only to the enabled spine devices (omitting the disabled spine device). At the end of the second test iteration, the controller may obtain test communication results from the networking devices.

After the second test iteration and in a third test iteration, the controller re-enables the first spine device and disables a second spine device before directing the leaf devices of the cluster to again send test communications in parallel to the set of leaf devices encountering errors, and so on. Again, at the end of the third test iteration, the controller may obtain test communication results from the networking devices, and so on.

202 concludes after the controller has performed test iterations which have disabled (or excluded) all of the spine devices one at a time. 204 concludes after the controller obtains all of the results of the test communications sent in parallel.

At 206, the controller provides machine-generated data which identifies one or more potentially faulty networking devices of the cluster based on the electronic results of the test communications sent in parallel (the operating output from the cluster of networking devices). Along these lines, the controller may combine counter values and update packet drop statistics. Such operation enables the controller to detect whether transmission blockages occurred among one or more ingress leaf devices, one or more spine devices, and/or one or more egress leaf devices. Such evaluation facilitates locating one or more potentially faulty networking devices.

In some embodiments, the controller is constructed and arranged to perform one or more remedial activities. For example, in certain embodiments, the controller provides a notification to a user or administrator identifying one or more potentially faulty networking devices. In addition or in the alternative, other remedial activities are performed or are available such as entering the results into a log, modifying operation of the electronic environment 100 to exclude or adjust use of one or more of the potentially faulty networking devices, combinations thereof, and so on.

It should be appreciated that identification of one or more potentially faulty networking devices from the results of the test communications may involve analysis of various counter readings obtained from the different test iterations. In some arrangements, transmission blockages are detected by comparing counter values (e.g., comparing transmission counts). In some arrangements, the counters are re-initialized (or reset) for each test iteration to simplify counter math.

FIG. 3 shows a view 300 illustrating how a controller 310 relates to the leaf devices 140 and the spine devices 150 of the cluster 120 during the detection process in accordance with certain embodiments. As shown, the controller 310 includes a communications interface, memory, and processing circuitry coupled with the communications interface and the memory. As is explained in further detail below, the memory stores instructions which, when carried out by the processing circuitry, cause the processing circuitry to perform the detection procedure 200.

Here, the controller 310 may connect to all leaf and spine devices 140, 150 using out-of-band connections. Along these lines, the controller 310 may send requests/commands 320 which direct the leaf devices 140 to prepare and send test communications during the detection process. Additionally, the controller 310 may send requests/commands 330 to self-exclude spine devices 150 during the detection process. Furthermore, the controller 310 receives results/data 340, 350 from the network devices such as dropped packet counts and/or other status, etc. Such an exchange of messages enables the controller 310 to continuously synchronize various counters from the leaf devices 140 (e.g., oversee CRC error counters) while enabling/disabling spine devices 150. The detection process may start (or launch) when there is a new CRC error on one or more leaf devices 140. The detection process may also be started in response to an instruction (e.g., a user command, as part of a standard qualification process, etc.).

It should be understood that the controller 310 may reside in a variety of locations. In some embodiments, the controller 310 resides within a spine device 150. In these embodiments, even if the spine device 150 is disabled from conveying test communications from ingress leaf devices 140 to egress leaf devices 140 for a particular test iteration, the controller 310 within the spine device 150 is nevertheless able to operate to perform the detection procedure 200.

In certain embodiments, one of the spine devices 150 is configured to operate as a platform for cloud-based network management. In these embodiments, the detection procedure 200 may run as a network management service on the platform and all networking devices 140, 150 of the cluster 120 may be treated as network management clients. Along these lines, a user I/O device is then able to access the platform (e.g., via a command line interface, a graphical user interface, etc.) to operate the controller 310, etc. Such features enable simplification and/or automation of network operations.

In other embodiments, at least a portion of the controller 310 resides in a different location. For example, at least a portion of the controller 310 may reside within a leaf device 140, within a host device 110, within an external device that is not part of the electronic environment 100, distributed among multiple devices, and so on.

In some embodiments, clients (leaf and spine devices) are constructed and arranged to mount an initial controller state. The clients then listen to requests from the controller 310 while the detection process is running (e.g., the requests/commands 320, 330) and return results (e.g., the results/data 340, 350) to the controller 310.

It should be understood that the controller 310 may be formed by a processor and memory. The processor operates in accordance with certain locally stored software constructs (e.g., an operating system, control code, etc.) to form specialized equipment that enables the controller 310 to communicate with the networking devices of the cluster 120. Such specialized equipment may be implemented in a variety of other ways including via multiple processors (or processing cores) running specialized software, application specific ICs (ASICs), field programmable gate arrays (FPGAs) and associated programs, discrete components, analog circuits, other hardware circuitry, combinations thereof, and so on.

In the context of one or more processors executing locally stored software, a computer program product 360 is capable of delivering all or portions of the software to the controller 310. Along these lines, the computer program product 360 includes a non-transitory computer readable medium which stores a set of instructions that controls one or more operations of the controller 310. Examples of suitable computer readable storage media include tangible articles of manufacture and apparatus which store instructions in a non-volatile manner such as DVD, CD-ROM, flash memory, disk memory, tape memory, and the like.

At this point, it should be understood that a problem within the cluster, such as a faulty ingress leaf device and/or a faulty spine device, may not be detected along the path (e.g., via CRC checksumming at the cell level) and instead may be detected as bad at the point of packet reassembly. Moreover, in the case of a faulty ingress leaf device 140 and/or a faulty spine device 150, corruption may be detected by (or may manifest at) one or more egress leaf devices 140.

Along these lines, it should be appreciated that there are many ways that packet reassembly may fail, and some sources of such failure are straight forward to identify/locate. However, other sources of such failure are more difficult to identify/locate.

For example, suppose that all cells arrive with correct cell CRC values but there is still a packet reassembly error. Here, the only symptom is that the packet could not be reassembled at the destination. Advantageously, the detection procedure 200 is able to reproduce the failure by sending more traffic thus enabling location of potentially faulty network devices (e.g., for removal and replacement).

In some embodiments, to identify the set of leaf devices 140 encountering errors for the detection procedure 200, a predefined hold time (or wait period) is imposed upon detection of an initial error by a first egress leaf device 140 to enable errors to potentially manifest on other egress leaf devices 140. A suitable amount of time to wait for such errors to occur in other egress leaf devices 140 is a few seconds (e.g., 10 seconds, 20 seconds, 30 seconds, etc.). Once the predefined hold time has passed, all egress leaf devices that detected errors during packet reassembly are considered to belong to the set of leaf devices 140 encountering errors.

It should be understood that similar waiting periods may be provided during the test iterations. Such similar waiting periods during the test iterations enable errors to manifest in multiple networking devices for effective analysis.

Additionally, it should be appreciated that the ingress leaf devices 140 sending test communications in parallel enables the detection procedure 200 to complete within a reasonable time (e.g., several minutes, a few hours, etc. depending on the scale of the cluster). In contrast, linear testing of leaf device pairs of a relatively large-scale cluster may be impractical.

### Examples

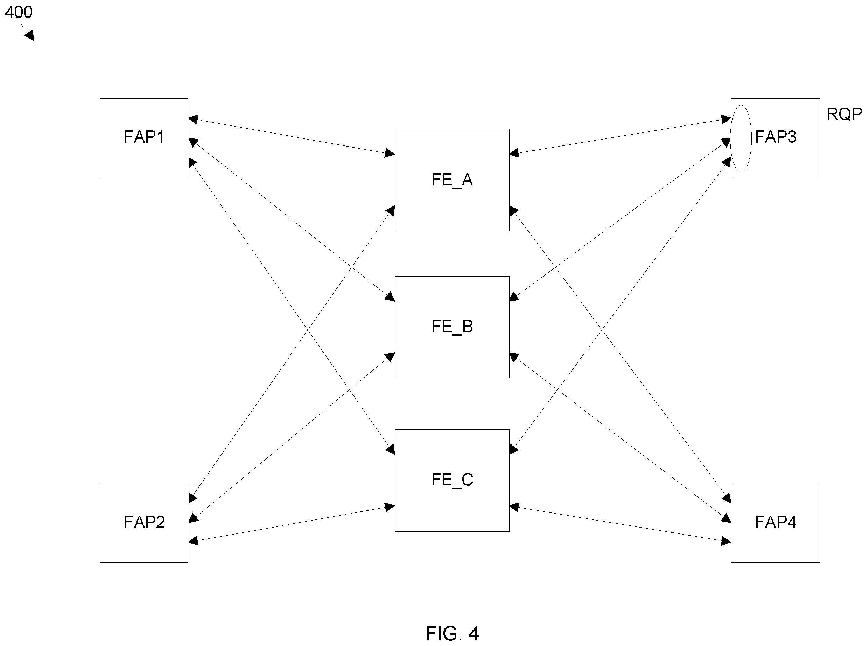

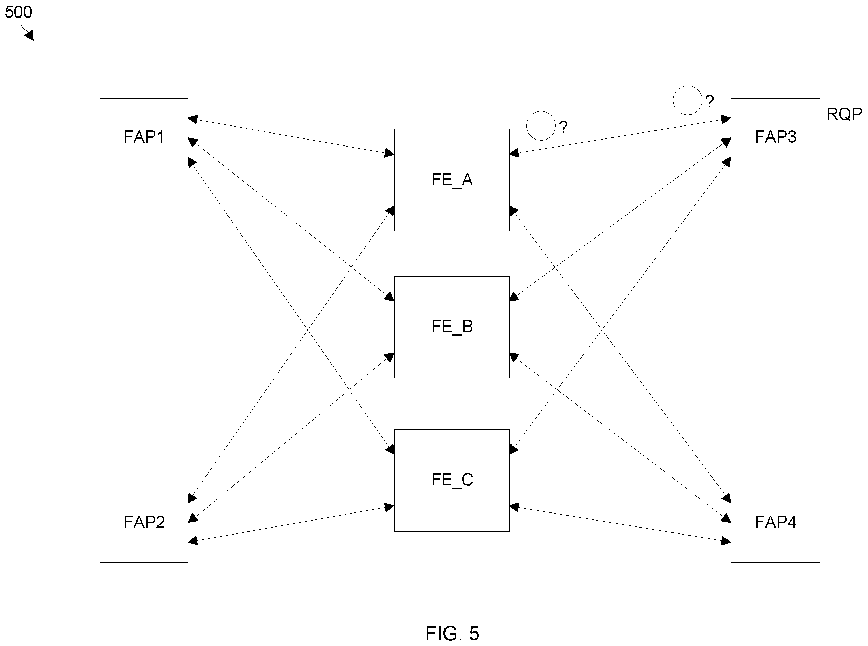

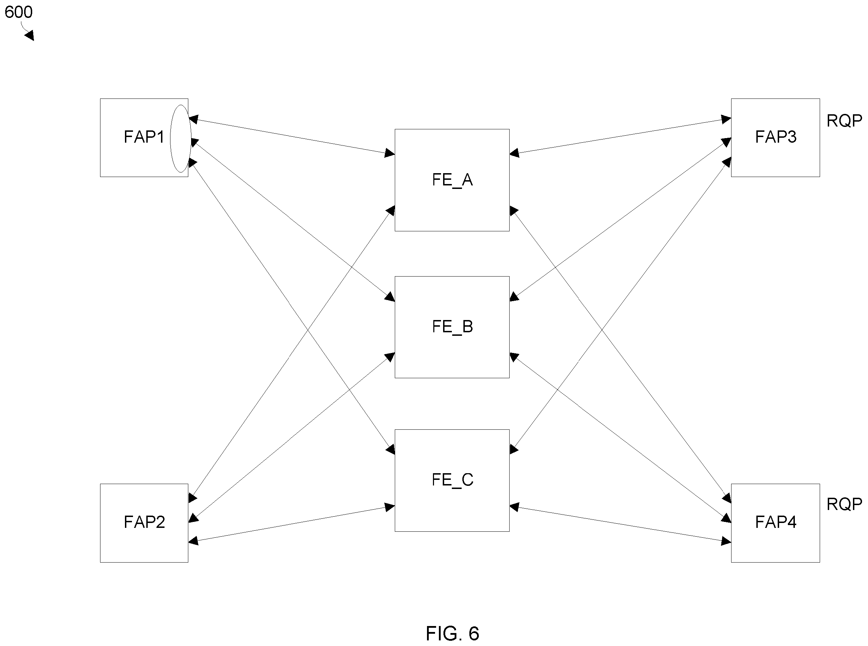

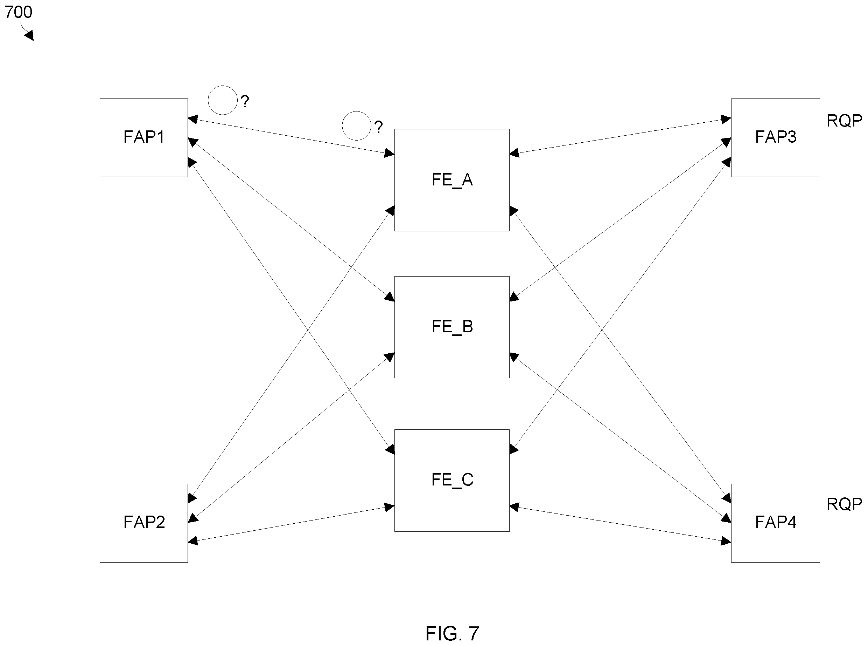

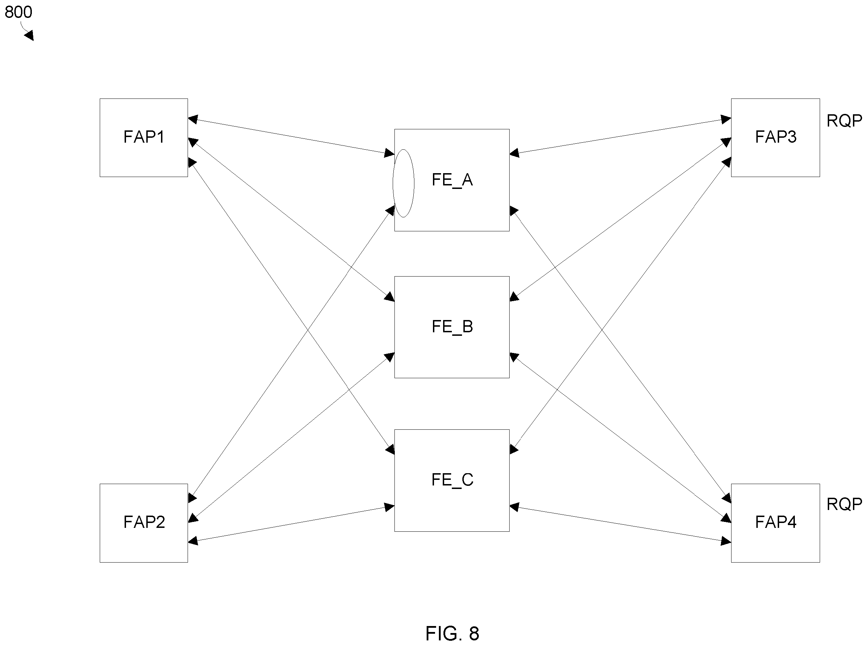

FIGS. 4 through 8 show example scenarios in which a controller (also see FIG. 3) is able to identify one or more potentially faulty networking devices of a cluster based on the results of test communications which were sent in parallel (also see 206 in FIG. 2). FIG. 4 shows an example scenario 400 which includes multiple lossy senders and one lossy receiver. FIG. 5 shows another example scenario 500 which includes multiple lossy senders and one lossy receiver. FIG. 6 shows an example scenario 600 which includes one lossy sender and multiple lossy receivers. FIG. 7 shows another example scenario 700 which includes one lossy sender and multiple lossy receivers. FIG. 8 shows an example scenario 800 which includes multiple lossy senders and multiple lossy receivers.

A lossy sender refers to a sending networking device that sends a transmission which fails to be properly received and/or processed by a destination networking device. Additionally, a lossy receiver refers to a destination networking device within which a failure manifests itself.

It should be understood that the example scenarios of FIGS. 4 through 8 refer to a cluster of networking devices having a leaf-spine topology (e.g., also see FIG. 1). However, rather than identify the networking devices as leaf and spine devices, FIGS. 4 through 8 refer to specific circuitry within the leaf and spine devices.

Along these lines, a first leaf device includes a first fabric access processor FAP1, a second leaf device includes a second fabric access processor FAP2, a third leaf device includes a third fabric access processor FAP3, and a fourth leaf device includes a fourth fabric access processor FAP4.

Additionally, a first spine device includes a first fabric element circuit FE_A, a second spine device includes a second fabric element circuit FE_B, a third spine device includes a third fabric element circuit FE_C. FE_A, FE_B, and FE_C are shown between the fabric access processors to illustrate that FE_A, FE_B, and FE_C belong to spine devices which convey cells among the leaf devices.

Furthermore, it should be understood that, even though FAP1 and FAP2 are shown on the left side and FAP3 and FAP4 are shown on the right side, these components belong to leaf devices which form a first tier of leaf devices (FAP1, FAP2, FAP3, and FAP4 are positioned in this manner simply for illustrative purposes). Similarly, FE_A, FE_B, and FE_C belong to spine devices which form a second tier of spine devices. Moreover, there is full mesh connectivity between the tiers thus providing the cluster of networking devices having a leaf-spine topology.

Also, from FIGS. 4 through 8, it should be clear that the cluster of network devices includes four leaf devices and three spine devices by way of example only. One of ordinary skill in the art would understand that the details provided regarding this example cluster of network devices are similarly applicable to other clusters of networking devices having differing numbers of leaf devices and/or differing numbers of spine devices.

With reference to the example scenario 400 shown in FIG. 4, suppose that the third leaf device, which includes FAP3, was identified as encountering a CRC error (illustrated by the letters "RQP" adjacent FAP3 which refers to an error relating to the reassembly queue processor of the third leaf device, e.g., packet drops or discards). Accordingly, in the example scenario 400, the set of leaf devices encountering errors includes the third leaf device.

Further suppose that the detection procedure 200 (FIG. 2) was then performed which involved all of the leaf devices sending respective packets in parallel to FAP3 through FE_A, FE_B, and FE_C during various test iterations. Such sending of packets (as cells) from the leaf devices in parallel enables the detection procedure 200 to be completed within a reasonable amount of time (e.g., even if the test were to involve 100s or 1000s of leaf devices).

Along these lines, while all of FE_A, FE_B, and FE_C were enabled to convey cells, FAP3 encountered CRC errors for the packets sent by all of the leaf devices. Additionally, in all subsequent test iterations while FE_A, FE_B, FE_C were disabled (or excluded) one at a time from conveying cells, FAP3 continued to encounter CRC errors for the packets received from the leaf devices. Accordingly, an analysis of the results obtained from the detection procedure 200 indicate that the FAP3 continues to encounter errors (illustrated by the oval in the FAP3).

To summarize, in the example scenario 400, there are multiple lossy senders and one lossy receiver. This situation continued to exist as FE_A, FE_B, and FE_C were excluded in different test iterations. Based on the results, the detection procedure 200 may conclude and output machine-generated data indicating that the leaf device having FAP3 should be removed and replaced with a replacement leaf device without removing/replacing the other networking devices of the cluster.

It should be understood that FAP3 may be able to receive packets that it has sent to itself. However, as long as there are still the multiple lossy senders and one lossy receiver involving FAP3 as identified above, the detection procedure 200 may conclude that the leaf device having FAP3 should be removed and replaced.

With reference to the example scenario 500 shown in FIG. 5, suppose that the third leaf device, which includes FAP3, was again identified as encountering a CRC error (illustrated by the letters "RQP" adjacent FAP3). Accordingly, in the example scenario 500, the set of leaf devices encountering errors again includes the third leaf device.

Further suppose that the detection procedure 200 (FIG. 2) was then performed which involved all of the leaf devices sending respective packets in parallel to FAP3 through FE_A, FE_B, and FE_C during various test iterations. Again, such sending of packets (as cells) from the leaf devices in parallel enables the detection procedure 200 to be completed within a reasonable amount of time.

Along these lines, while all of FE_A, FE_B, and FE_C were enabled to convey cells, FAP3 encountered CRC errors for the packets sent by all of the leaf devices. Additionally, in subsequent test iterations while FE_A, FE_B, FE_C were disabled (or excluded) one at a time from conveying cells, FAP3 encountered CRC errors for packets sent by the leaf devices only while FE_A was enabled (illustrated as circles and "?" on the link between FE_A and FAP3). That is, in the test iteration when FE_A was disabled from conveying cells, no CRC errors were encountered.

To summarize, in the example scenario 500, there are multiple lossy senders and one lossy receiver. However, in the test iteration when FE_A was excluded, there was no CRC error detected by FAP3. Based on the results, the detection procedure 200 may conclude and output machine-generated data indicating that the spine device having FE_A should be removed and replaced with a replacement spine device and the leaf device having FAP3 should be removed and replaced with a replacement leaf device without removing/replacing the other networking devices of the cluster.

Again, it should be understood that FAP3 may be able to receive packets that it has sent to itself. However, as long as there are still the multiple lossy senders and one lossy receiver involving FAP3, the detection procedure 200 may conclude that the leaf device having FAP3 should be removed and replaced.

With reference to the example scenario 600 shown in FIG. 6, suppose that the third leaf device which includes FAP3 and the fourth leaf device which includes FAP4 were identified as encountering CRC errors (illustrated by the letters "RQP" adjacent FAP3 and FAP4). Accordingly, in the example scenario 600, the set of leaf devices encountering errors includes the third leaf device and the fourth leaf device.

Further suppose that the detection procedure 200 (FIG. 2) was then performed which involved all of the leaf devices sending respective packets in parallel to FAP3 and FAP4 through FE_A, FE_B, and FE_C during various test iterations. Such sending of packets (as cells) from the leaf devices in parallel enables the detection procedure 200 to be completed within a reasonable amount of time.

Along these lines, while all of FE_A, FE_B, and FE_C were enabled to convey cells, FAP3 and FAP4 encountered CRC errors for the packets sent only by FAP1 (i.e., packets sent by other leaf devices were received without error). Additionally, in subsequent test iterations while FE_A, FE_B, FE_C were disabled (or excluded) one at a time from conveying cells, FAP3 and FAP4 continued to encounter CRC errors for the packets sent from FAP1. Accordingly, an analysis of the results obtained from the detection procedure 200 indicate that the FAP1 continues to produce errors (illustrated by the oval in FAP1).

To summarize, in the example scenario 600, there is one lossy sender and multiple lossy receivers. This situation continued to exist even as FE_A, FE_B, and FE_C were individually excluded in different test iterations. Based on the results, the detection procedure 200 may conclude and output machine-generated data indicating that the leaf device having FAP1 should be removed and replaced with a replacement leaf device without removing/replacing the other networking devices of the cluster.

It should be understood that FAP1 may be able to receive packets that it has sent to itself. However, as long as there is still one lossy sender and multiple lossy receivers involving FAP1 as the lossy sender, the detection procedure 200 may conclude that the leaf device having FAP1 should be removed and replaced.

With reference to the example scenario 700 shown in FIG. 7, suppose that again the third leaf device which includes FAP3 and the fourth leaf device which includes FAP4 were identified as encountering CRC errors (illustrated by the letters "RQP" adjacent FAP3 and FAP4). Accordingly, in the example scenario 700, the set of leaf devices encountering errors includes the third leaf device and the fourth leaf device.

Further suppose that the detection procedure 200 (FIG. 2) was then performed which involved all of the leaf devices sending respective packets in parallel to FAP3 and FAP4 through FE_A, FE_B, and FE_C during various test iterations. Again, such sending of packets (as cells) from the leaf devices in parallel enables the detection procedure 200 to be completed within a reasonable amount of time.

Along these lines, while all of FE_A, FE_B, and FE_C were enabled to convey cells, FAP3 and FAP4 encountered CRC errors for the packets sent only by FAP1 (packets sent by other leaf devices were received without error). Additionally, in subsequent test iterations while FE_A, FE_B, FE_C were disabled (or excluded) one at a time from conveying cells, FAP3 and FAP4 encountered CRC errors for the packets sent from FAP1 only while FE_A was enabled. That is, in the test iteration when FE_A was disabled from conveying cells, no CRC errors were encountered. Accordingly, an analysis of the results obtained from the detection procedure 200 indicate that the combination of FAP1 and FE_A continues to produce errors (illustrated as circles and "?" on the link between FAP1 and FE_A).

To summarize, in the example scenario 700, there is one lossy sender and multiple lossy receivers. However, in the test iteration when FE_A was excluded, there was no CRC error detected by FAP3 or FAP4. Based on the results, the detection procedure 200 may conclude and output machine-generated data indicating that the leaf device having FAP1 should be removed and replaced with a replacement leaf device, and the spine device having FE_A should be removed and replaced with a replacement spine device without removing/replacing the other networking devices of the cluster.

It should be understood that FAP1 may be able to receive packets that it has sent to itself. However, as long as there is still one lossy sender and multiple lossy receivers involving FAP1 as the lossy sender, the detection procedure 200 may conclude that the leaf device having FAP1 should be removed and replaced.

With reference to the example scenario 800 shown in FIG. 8, suppose that again the third leaf device which includes FAP3 and the fourth leaf device which includes FAP4 were identified as encountering CRC errors (illustrated by the letters "RQP" adjacent FAP3 and FAP4). Accordingly, in the example scenario 800, the set of leaf devices encountering errors includes the third leaf device and the fourth leaf device.

Further suppose that the detection procedure 200 (FIG. 2) was then performed which involved all of the leaf devices sending respective packets in parallel to FAP3 and FAP4 through FE_A, FE_B, and FE_C during various test iterations. Such sending of packets (as cells) from the leaf devices in parallel enables the detection procedure 200 to be completed within a reasonable amount of time.

Along these lines, while all of FE_A, FE_B, and FE_C were enabled to convey cells, FAP3 and FAP4 encountered CRC errors for the packets sent by all of the leaf devices. Additionally, in subsequent test iterations while FE_A, FE_B, FE_C were disabled (or excluded) one at a time from conveying cells, FAP3 and FAP4 encountered CRC errors for the packets sent from all of the leaf devices only while FE_A was enabled. That is, in the test iteration when FE_A was disabled from conveying cells, no CRC errors were encountered. Accordingly, an analysis of the results obtained from the detection procedure 200 indicate that the spine device having FE_A continues to produce errors (illustrated as oval in FE A).

To summarize, in the example scenario 800, there are multiple lossy senders and multiple lossy receivers. However, in the test iteration when FE_A was excluded, there was no CRC error detected by FAP3 or FAP4. Based on the results, the detection procedure 200 may conclude and output machine-generated data indicating that the spine device having FE_A should be removed and replaced with a replacement spine device without removing/replacing the other networking devices of the cluster.

### Further Details

As mentioned earlier, the controller 310 is able to perform evaluations on clusters 120 having differing numbers of leaf devices 140 and/or spine devices 150. For such clusters 120, the detection procedure 200 is able to effectively and efficiently identify one or more potentially faulty networking devices (e.g., for removal/replacement, etc.) based on results of the test communications sent in parallel.

As described above, a technique involves detecting one or more potentially faulty networking devices of a cluster 120 of networking devices having a leaf-spine topology. Such a technique includes directing leaf devices 140 of the cluster 120 to transmit test communications in parallel to a set of leaf devices 140 encountering errors, and identifying one or more potentially faulty networking devices of the cluster 120 based on results of the test communications sent in parallel. As the leaf devices 140 transmit test communications in parallel to the set of leaf devices 140 encountering errors, spine devices 150 of the cluster are disabled (or excluded) one at a time during different test iterations to identify a potentially faulty leaf device 140 and/or spine device 150 (e.g., for replacement/removal/etc.). Such transmitting of test communications in parallel is superior to linearly retesting each leaf device pair by reducing audit runtime as well as enabling discovery of queuing errors, cell-level fragmentation/reassembly-related errors, etc. Such a cluster 120 may operate as a DES system which supports a large-scale computing environment such as those for AI, ML, data centers, corporate campuses, and so on. Moreover, such detection/auditing may be performed while the cluster 120 is in operation.

It should be appreciated that the techniques disclosed herein solve technological problems such as locating a cause of a failure within a cluster of networking devices having a leaf-spine topology. Such techniques provide technological solutions resulting in various technological efficiencies such as completing a detection process within a reasonable amount of time, performing the detection process while the leaf-spine cluster remains operational to perform useful work, effectively identifying potentially faulty devices which may escape detection via simple packet injection, and so on.

While various embodiments of the present disclosure have been particularly shown and described, it will be understood by those skilled in the art that various changes in form and details may be made therein without departing from the spirit and scope of the present disclosure. Such modifications and enhancements are intended to belong to various embodiments of the disclosure.

One embodiment is directed to a method of detecting one or more potentially faulty networking devices of a cluster of networking devices having a leaf-spine topology. The method includes directing leaf devices to send test communications in parallel through spine devices to a set of leaf devices encountering errors, the leaf devices and the spine devices forming at least a portion of the cluster of networking devices having the leaf-spine topology. The method further includes obtaining, as electronic results of the test communications sent in parallel, operating output from the cluster of networking devices. The method further includes, based on the operating output from the cluster of networking devices, providing machine-generated data identifying one or more potentially faulty networking devices of the cluster.

Another embodiment is directed to apparatus to detect one or more potentially faulty networking devices of a cluster of networking devices having a leaf-spine topology. The apparatus includes a communications interface, memory, and processing circuitry coupled with the communications interface and the memory. The memory stores instructions which, when carried out by the processing circuitry, cause the processing circuitry to:
(A) direct, through the communications interface, leaf devices to send test communications in parallel through spine devices to a set of leaf devices encountering errors, the leaf devices and the spine devices forming the cluster of networking devices having the leaf-spine topology,
(B) obtain, through the communications interface, results of the test communications sent in parallel, and
(C) based on the results of the test communications sent in parallel, identify one or more potentially faulty networking devices of the cluster.

Yet another embodiment is directed to a computer program product having a non-transitory computer readable medium which stores a set of instructions to detect one or more potentially faulty networking devices of a cluster of networking devices having a leaf-spine topology. The set of instructions, when carried out by computerized circuitry, causes the computerized circuitry to perform a method of:
(A) directing leaf devices to send test communications in parallel through spine devices to a set of leaf devices encountering errors, the leaf devices and the spine devices forming at least a portion of the cluster of networking devices having the leaf-spine topology;
(B) from the cluster of networking devices, obtaining operating output based on the test communications sent in parallel; and
(C) based on the operating output from the cluster of networking devices, providing machine-generated data identifying one or more potentially faulty networking devices of the cluster.

In some arrangements, the method further includes disabling the spine devices of the cluster one at a time from conveying test communications while the leaf devices of the cluster send the test communications in parallel to the set of leaf devices encountering errors.

In some arrangements, disabling the spine devices of the cluster one at a time includes:
(i) during a first test iteration, disabling a first spine device of the cluster from conveying test communications and enabling remaining spine devices of the cluster to convey test communications while the leaf devices of the cluster send first test communications in parallel to the set of leaf devices encountering errors, and
(ii) after the first test iteration and during a second test iteration, disabling a second spine device of the cluster from conveying test communications and enabling remaining spine devices of the cluster to convey test communications while the leaf devices of the cluster send second test communications in parallel to the set of leaf devices encountering errors, the second spine device being different from the first spine device.

In some arrangements, directing the leaf devices to send the test communications in parallel includes, prior to disabling the spine devices of the cluster one at a time, directing the leaf devices of the cluster to send test communications in parallel to the set of leaf devices encountering errors while all of the spine devices are enabled to confirm that the cluster includes one or more potentially faulty networking devices.

In some arrangements, providing the machine-generated data identifying the one or more potentially faulty networking devices of the cluster includes:
(i) based on the operating output obtained as electronic results of the test communications sent in parallel, ascertaining that errors occurred between multiple sending leaf devices and a single receiving leaf device, and
(ii) within the machine-generated data, identifying the single receiving leaf device as a potentially faulty network device of the cluster.

In some arrangements, providing the machine-generated data identifying the one or more potentially faulty networking devices of the cluster further includes:
(i) based on the operating output obtained as electronic results of the test communications sent in parallel, ascertaining that no errors occurred between the multiple sending leaf devices and the single receiving leaf device while the multiple sending leaf devices sent test communications to the single receiving leaf device and a particular spine device of the cluster was disabled from conveying test communications, and
(ii) within the machine-generated data, identifying the particular spine device as another potentially faulty network device of the cluster.

In some arrangements, providing the machine-generated data identifying the one or more potentially faulty networking devices of the cluster includes:
(i) based on the operating output obtained as electronic results of the test communications sent in parallel, ascertaining that errors occurred between a single sending leaf device and multiple receiving leaf devices, and
(ii) within the machine-generated data, identifying the single sending leaf device as a potentially faulty network device of the cluster.

In some arrangements, providing the machine-generated data identifying the one or more potentially faulty networking devices of the cluster further includes:
(i) based on the operating output obtained as electronic results of the test communications sent in parallel, ascertaining that no errors occurred between the single sending leaf device and the multiple receiving leaf devices while the single sending leaf device sent test communications to the multiple receiving leaf devices and a particular spine device of the cluster was disabled from conveying test communications, and
(ii) within the machine-generated data, identifying the particular spine device as another potentially faulty network device of the cluster.

In some arrangements, providing the machine-generated data identifying the one or more potentially faulty networking devices of the cluster includes:
(i) based on the operating output obtained as electronic results of the test communications sent in parallel, ascertaining that errors occurred between multiple sending leaf devices and multiple receiving leaf devices while all spine devices of the cluster were enabled to convey test communications;
(ii) based on the operating output obtained as electronic results of the test communications sent in parallel, ascertaining that no errors occurred between the multiple sending leaf devices and the multiple receiving leaf devices while a particular spine device of the cluster was disabled from conveying test communications; and
(iii) within the machine-generated data, identifying the particular spine device as a potentially faulty network device of the cluster.

In some arrangements, the method further includes, prior to directing the leaf devices to send test communications in parallel, detecting a set of errors encountered by the set of leaf devices.

In some arrangements, detecting the set of errors encountered by the set of leaf devices includes discovering that the set of leaf devices encountered a set of cyclic redundancy check (CRC) errors during a set of packet reassembly operations performed by the set of leaf devices.

In some arrangements, detecting the set of errors encountered by the set of leaf devices includes sensing a set of interrupt signals indicating that a set of cyclic redundancy check (CRC) errors has occurred within the set of leaf devices.

In some arrangements, detecting the set of errors encountered by the set of leaf devices includes polling a set of error counters to discover that a set of cyclic redundancy check (CRC) errors has occurred in the set of leaf devices.

In some arrangements, detecting the set of errors encountered by the set of leaf devices includes:
(i) upon detecting a first error encountered by a first leaf device, starting a timer that expires upon expiration of a predefined amount of time, and
(ii) upon expiration of the timer, identifying the first leaf device and any other leaf devices that encountered an error after the timer was started and before the timer expired as belonging to the set of leaf devices encountering errors.

In some arrangements, directing the leaf devices to send the test communications in parallel includes imposing a per leaf maximum test communication transmission rate on the leaf devices of the cluster to limit test traffic sent by the leaf devices of the cluster.

It should be understood that directing the leaf devices to send test communications in parallel through the spine devices may involve directing multiple leaf devices of the cluster (but perhaps not all of the leaf devices of the cluster) to send test communications through the spine devices at the same time. In some embodiments, there is at least one leaf device that sends test communications at a different time (perhaps in parallel with a second group of leaf devices or delayed relative to other test communications). Accordingly, when test communications are said to be sent in parallel, one of more of the test communications may be delayed with respect to other test communications. The more parallelism that is achieved, the greater the time savings.

It should be further understood that a Distributed Etherlink Switch (DES) system may consist of a cluster of devices referred to as leaf devices (nodes) and spine devices (fabric). In the cluster, the leaf devices are connected to each other via the spine devices. Hosts connect to the leaf devices.

DES clusters can potentially have a huge number of leaf and spine devices and if there is bad FAP/FE circuitry in the system, a conventional linear approach would find it difficult to locate it. However, the fabric audit feature as disclosed herein aims to help with identifying such components so the devices can be removed and replaced.

In a smaller scale configuration, linear testing may make sense. However, in a higher scale situation, linear testing would take an unreasonable amount of time to complete.

In accordance with certain embodiments, a controller agent monitors all devices (both leaf and spine) in a cluster and starts the detection/audit process whenever there are packet drops with CRC errors seen when fabric cells are reassembled. The controller then tries to reproduce the packet drop by requesting all leaf clients to send monitoring flows (e.g., using SAT engines) toward the leaf devices where the original CRC errors were seen. If the errors are reproducible, the test traffic can be run again but with one spine excluded at a time to see if any specific spine is the problem. It would be evident if there is a faulty leaf device since it will always be present in the traffic paths with packet drops.

In some embodiments, each test iteration is done with traffic running in parallel between all leaf devices to reduce the audit runtime. To support this, the receiver devices also have the ability to identify the sender of each monitor packet so the number of packets sent and received per traffic path can be properly counted.

In some embodiments, each test iteration is done with traffic running in parallel between the leaf devices but not all at once if the cluster is extremely large (e.g., due to SAT engine limitations). In these embodiments, the SAT engines may be coordinated to nevertheless send a large number of flows in parallel such that all paths are eventually tested within a reasonable time.

Advantageously, the controller works on a distributed switch cluster. Additionally, there is per path counter support so multiple traffic paths can be done at the same time. In contrast, a linear algorithm (going through each leaf device pair) would be too slow given the potential scale of DES clusters.

In some embodiments, packet CRC errors are not counted and come from interrupts. In other embodiments, packet CRC errors are detected by polling.

It should be appreciated that the techniques disclosed herein may support triaging packet loss on a live system. The process may be triggered automatically without manual intervention by reacting to the RQP discards on one or more leaf devices.

RQP discards could mean some cells were lost or they all arrived (with correct CRC individually) but the egress leaf device failed to assemble the original Ethernet frame. Along these lines, certain improvements disclosed herein may react to certain specific RQP error interrupts as others correspond to other causes for RQP drops which are diagnosed in other ways.

In some embodiments, encountering a CRC error may be of interest. This can happen when the egress leaf device assembles an Ethernet packet from the cells but the packet CRC does not match. This may come from a hardware interrupt bit (e.g., polled every two seconds along with all other interrupts) but not really counted.

In some embodiments, the fabric auditing process may be started manually, e.g. to verify a new DSF cluster. However, nothing precludes detection/auditing being started if there was traffic loss in the cluster earlier.

Those skilled in the art will therefore understand that various changes in form and detail may be made to the embodiments disclosed herein without departing from the scope of the following claims.

Along these lines, the leaf devices 140 were described above as directly connecting with respective host devices 110 by way of example only. However, nothing precludes a host device 110 from connecting with multiple leaf devices 140. For example, if a host device 110 has multiple interfaces, the host device 110 may connect with one or more (or all) of the leaf devices 140.

Additionally, by way of example only and in accordance with certain embodiments, the detection process was described above as starting in response to detection of a new CRC error or in response to an instruction such as a user command. However, nothing precludes the detection process from being started in other ways. In some embodiments, the detection process runs periodically (e.g., based on a schedule) such as every X hours or every Y days (e.g., where X and Y refer to parameters that may be adjusted by a user). In some embodiments, the detection process starts when link utilization (or one or more other cluster activity metrics) falls below a predefined threshold and a predefined period of time has elapsed since the detection process last ran. In some embodiments, the detection process starts automatically when a user transitions the cluster into a certain maintenance mode or state (e.g., a particular diagnostic mode). Moreover, in some embodiments, the cluster is customizable and supports starting the detection process in more than one of the above-described ways and/or other ways. Such modifications and/or enhancements are intended to belong to various embodiments of the disclosure.

The disclosure in the application also includes the following numbered clauses:
1. A method of detecting one or more potentially faulty networking devices of a cluster of networking devices having a leaf-spine topology, the method comprising:
   directing leaf devices to send test communications in parallel through spine devices to a set of leaf devices encountering errors, the leaf devices and the spine devices forming at least a portion of the cluster of networking devices having the leaf-spine topology;
   obtaining, as electronic results of the test communications sent in parallel, operating output from the cluster of networking devices; and
   based on the operating output from the cluster of networking devices, providing machine-generated data identifying one or more potentially faulty networking devices of the cluster.
2. The method of clause 1, further comprising:
   disabling the spine devices of the cluster one at a time from conveying test communications while the leaf devices of the cluster send the test communications in parallel to the set of leaf devices encountering errors.
3. The method of clause 2, wherein disabling the spine devices of the cluster one at a time includes:
   during a first test iteration, disabling a first spine device of the cluster from conveying test communications and enabling remaining spine devices of the cluster to convey test communications while the leaf devices of the cluster send first test communications in parallel to the set of leaf devices encountering errors, and
   after the first test iteration and during a second test iteration, disabling a second spine device of the cluster from conveying test communications and enabling remaining spine devices of the cluster to convey test communications while the leaf devices of the cluster send second test communications in parallel to the set of leaf devices encountering errors, the second spine device being different from the first spine device.
4. The method of clause 2, wherein directing the leaf devices to send the test communications in parallel includes:
   prior to disabling the spine devices of the cluster one at a time, directing the leaf devices of the cluster to send test communications in parallel to the set of leaf devices encountering errors while all of the spine devices are enabled to confirm that the cluster includes one or more potentially faulty networking devices.
5. The method of clause 1, wherein providing the machine-generated data identifying the one or more potentially faulty networking devices of the cluster includes:
   based on the operating output obtained as electronic results of the test communications sent in parallel, ascertaining that errors occurred between multiple sending leaf devices and a single receiving leaf device, and
   within the machine-generated data, identifying the single receiving leaf device as a potentially faulty network device of the cluster.
6. The method of clause 5, wherein providing the machine-generated data identifying the one or more potentially faulty networking devices of the cluster further includes:
   based on the operating output obtained as electronic results of the test communications sent in parallel, ascertaining that no errors occurred between the multiple sending leaf devices and the single receiving leaf device while the multiple sending leaf devices sent test communications to the single receiving leaf device and a particular spine device of the cluster was disabled from conveying test communications, and
   within the machine-generated data, identifying the particular spine device as another potentially faulty network device of the cluster.
7. The method of clause 1, wherein providing the machine-generated data identifying the one or more potentially faulty networking devices of the cluster includes:
   based on the operating output obtained as electronic results of the test communications sent in parallel, ascertaining that errors occurred between a single sending leaf device and multiple receiving leaf devices, and
   within the machine-generated data, identifying the single sending leaf device as a potentially faulty network device of the cluster.
8. The method of clause 7, wherein providing the machine-generated data identifying the one or more potentially faulty networking devices of the cluster further includes:
   based on the operating output obtained as electronic results of the test communications sent in parallel, ascertaining that no errors occurred between the single sending leaf device and the multiple receiving leaf devices while the single sending leaf device sent test communications to the multiple receiving leaf devices and a particular spine device of the cluster was disabled from conveying test communications, and
   within the machine-generated data, identifying the particular spine device as another potentially faulty network device of the cluster.
9. The method of clause 1, wherein providing the machine-generated data identifying the one or more potentially faulty networking devices of the cluster includes:
   based on the operating output obtained as electronic results of the test communications sent in parallel, ascertaining that errors occurred between multiple sending leaf devices and multiple receiving leaf devices while all spine devices of the cluster were enabled to convey test communications;
   based on the operating output obtained as electronic results of the test communications sent in parallel, ascertaining that no errors occurred between the multiple sending leaf devices and the multiple receiving leaf devices while a particular spine device of the cluster was disabled from conveying test communications; and
   within the machine-generated data, identifying the particular spine device as a potentially faulty network device of the cluster.
10. The method of clause 1, further comprising:
   prior to directing the leaf devices to send test communications in parallel, detecting a set of errors encountered by the set of leaf devices.
11. The method of clause 10, wherein detecting the set of errors encountered by the set of leaf devices includes:
   discovering that the set of leaf devices encountered a set of cyclic redundancy check (CRC) errors during a set of packet reassembly operations performed by the set of leaf devices.
12. The method of clause 10, wherein detecting the set of errors encountered by the set of leaf devices includes:
   sensing a set of interrupt signals indicating that a set of cyclic redundancy check (CRC) errors has occurred within the set of leaf devices.
13. The method of clause 10, wherein detecting the set of errors encountered by the set of leaf devices includes:
   polling a set of error counters to discover that a set of cyclic redundancy check (CRC) errors has occurred in the set of leaf devices.
14. The method of clause 10, wherein detecting the set of errors encountered by the set of leaf devices includes:
   upon detecting a first error encountered by a first leaf device, starting a timer that expires upon expiration of a predefined amount of time, and
   upon expiration of the timer, identifying the first leaf device and any other leaf devices that encountered an error after the timer was started and before the timer expired as belonging to the set of leaf devices encountering errors.
15. The method of clause 1, wherein directing the leaf devices to send the test communications in parallel includes:
   imposing a per leaf maximum test communication transmission rate on the leaf devices of the cluster to limit test traffic sent by the leaf devices of the cluster.
16. Apparatus to audit a cluster of networking devices having a leaf-spine topology, the apparatus comprising:
   a communications interface;
   memory; and
   processing circuitry coupled with the communications interface and the memory, the memory storing instructions which, when carried out by the processing circuitry, cause the processing circuitry to:
      direct, through the communications interface, leaf devices to send test communications in parallel through spine devices to a set of leaf devices encountering errors, the leaf devices and the spine devices forming the cluster of networking devices having the leaf-spine topology,
      obtain, through the communications interface, results of the test communications sent in parallel, and
      based on the results of the test communications sent in parallel, identify one or more potentially faulty networking devices of the cluster.
17. The apparatus of clause 16, wherein the instructions further cause the processing circuitry to:
   prior to directing the leaf devices of the cluster to send test communications in parallel, discover that the set of leaf devices encountered a set of cyclic redundancy check (CRC) errors during a set of packet reassembly operations performed by the set of leaf devices.
18. The apparatus of clause 17, wherein the instructions further cause the processing circuitry to:
   individually disable the spine devices of the cluster from conveying test communications while the leaf devices of the cluster send the test communications in parallel to the set of leaf devices encountering errors.
19. The apparatus of clause 18, wherein the processing circuitry, when individually disabling the spine devices from conveying test communications, is constructed and arranged to:
   during a first test iteration, disable a first spine device of the cluster from conveying test communications and enable remaining spine devices of the cluster to convey test communications while the leaf devices of the cluster send first test communications in parallel to the set of leaf devices encountering errors, and
   after the first test iteration and during a second test iteration, disable a second spine device of the cluster from conveying test communications and enable remaining spine devices of the cluster to convey test communications while the leaf devices of the cluster send second test communications in parallel to the set of leaf devices encountering errors, the second spine device being different from the first spine device.
20. A computer program product having a non-transitory computer readable medium which stores a set of instructions to detect one or more potentially faulty networking devices of a cluster of networking devices having a leaf-spine topology; the set of instructions, when carried out by computerized circuitry, causing the computerized circuitry to perform a method of:
   directing leaf devices to send test communications in parallel through spine devices to a set of leaf devices encountering errors, the leaf devices and the spine devices forming at least a portion of the cluster of networking devices having the leaf-spine topology;
   from the cluster of networking devices, obtaining operating output based on the test communications sent in parallel; and
   based on the operating output from the cluster of networking devices, providing machine-generated data identifying one or more potentially faulty networking devices of the cluster.

## Claims

1. A method of detecting one or more potentially faulty networking devices of a cluster of networking devices having a leaf-spine topology, the method comprising:
directing leaf devices to send test communications in parallel through spine devices to a set of leaf devices encountering errors, the leaf devices and the spine devices forming at least a portion of the cluster of networking devices having the leaf-spine topology;
obtaining, as electronic results of the test communications sent in parallel, operating output from the cluster of networking devices; and
based on the operating output from the cluster of networking devices, providing machine-generated data identifying one or more potentially faulty networking devices of the cluster.

2. The method of claim 1, further comprising:
disabling the spine devices of the cluster one at a time from conveying test communications while the leaf devices of the cluster send the test communications in parallel to the set of leaf devices encountering errors.

3. The method of claim 2, wherein disabling the spine devices of the cluster one at a time includes:
during a first test iteration, disabling a first spine device of the cluster from conveying test communications and enabling remaining spine devices of the cluster to convey test communications while the leaf devices of the cluster send first test communications in parallel to the set of leaf devices encountering errors, and
after the first test iteration and during a second test iteration, disabling a second spine device of the cluster from conveying test communications and enabling remaining spine devices of the cluster to convey test communications while the leaf devices of the cluster send second test communications in parallel to the set of leaf devices encountering errors, the second spine device being different from the first spine device.

4. The method of claim 2, wherein directing the leaf devices to send the test communications in parallel includes:
prior to disabling the spine devices of the cluster one at a time, directing the leaf devices of the cluster to send test communications in parallel to the set of leaf devices encountering errors while all of the spine devices are enabled to confirm that the cluster includes one or more potentially faulty networking devices.

5. The method of any preceding claim, wherein providing the machine-generated data identifying the one or more potentially faulty networking devices of the cluster includes:
based on the operating output obtained as electronic results of the test communications sent in parallel, ascertaining that errors occurred between multiple sending leaf devices and a single receiving leaf device, and
within the machine-generated data, identifying the single receiving leaf device as a potentially faulty network device of the cluster.

6. The method of claim 5, wherein providing the machine-generated data identifying the one or more potentially faulty networking devices of the cluster further includes:
based on the operating output obtained as electronic results of the test communications sent in parallel, ascertaining that no errors occurred between the multiple sending leaf devices and the single receiving leaf device while the multiple sending leaf devices sent test communications to the single receiving leaf device and a particular spine device of the cluster was disabled from conveying test communications, and
within the machine-generated data, identifying the particular spine device as another potentially faulty network device of the cluster.

7. The method of any of claims 1 to 4, wherein providing the machine-generated data identifying the one or more potentially faulty networking devices of the cluster includes:
based on the operating output obtained as electronic results of the test communications sent in parallel, ascertaining that errors occurred between a single sending leaf device and multiple receiving leaf devices, and
within the machine-generated data, identifying the single sending leaf device as a potentially faulty network device of the cluster.

8. The method of claim 7, wherein providing the machine-generated data identifying the one or more potentially faulty networking devices of the cluster further includes:
based on the operating output obtained as electronic results of the test communications sent in parallel, ascertaining that no errors occurred between the single sending leaf device and the multiple receiving leaf devices while the single sending leaf device sent test communications to the multiple receiving leaf devices and a particular spine device of the cluster was disabled from conveying test communications, and
within the machine-generated data, identifying the particular spine device as another potentially faulty network device of the cluster.

9. The method of any of claims 1 to 4, wherein providing the machine-generated data identifying the one or more potentially faulty networking devices of the cluster includes:
based on the operating output obtained as electronic results of the test communications sent in parallel, ascertaining that errors occurred between multiple sending leaf devices and multiple receiving leaf devices while all spine devices of the cluster were enabled to convey test communications;
based on the operating output obtained as electronic results of the test communications sent in parallel, ascertaining that no errors occurred between the multiple sending leaf devices and the multiple receiving leaf devices while a particular spine device of the cluster was disabled from conveying test communications; and
within the machine-generated data, identifying the particular spine device as a potentially faulty network device of the cluster.

10. The method of any preceding claim, further comprising:
prior to directing the leaf devices to send test communications in parallel, detecting a set of errors encountered by the set of leaf devices.

11. The method of claim 10, wherein detecting the set of errors encountered by the set of leaf devices includes:
discovering that the set of leaf devices encountered a set of cyclic redundancy check (CRC) errors during a set of packet reassembly operations performed by the set of leaf devices;
sensing a set of interrupt signals indicating that a set of cyclic redundancy check (CRC) errors has occurred within the set of leaf devices;
polling a set of error counters to discover that a set of cyclic redundancy check (CRC) errors has occurred in the set of leaf devices; and/or
upon detecting a first error encountered by a first leaf device, starting a timer that expires upon expiration of a predefined amount of time, and
upon expiration of the timer, identifying the first leaf device and any other leaf devices that encountered an error after the timer was started and before the timer expired as belonging to the set of leaf devices encountering errors.

12. The method of any preceding claim, wherein directing the leaf devices to send the test communications in parallel includes:
imposing a per leaf maximum test communication transmission rate on the leaf devices of the cluster to limit test traffic sent by the leaf devices of the cluster.

13. Apparatus for detecting one or more potentially faulty networking devices of a cluster of networking devices having a leaf-spine topology, the apparatus comprising:
a communications interface;
memory; and
processing circuitry coupled with the communications interface and the memory, the memory storing instructions which, when carried out by the processing circuitry, cause the processing circuitry to perform a method as set out in at least one of claims 1 to 12.

14. A computer readable medium storing a set of program instructions which, when carried by one or more processors, cause the one or more processors to perform a method as set out in at least one of claims 1 to 12.
